Europäisches Patentamt

(19) European Patent Office

Office européen des brevets

(11) Numéro de publication: **0 073 706**
**B1**

(12) **FASCICULE DE BREVET EUROPEEN**

(45) Date de publication du fascicule du brevet:
09.04.86

(51) Int. Cl.⁴: **G 01 S 13/52,** G 01 S 13/20

(21) Numéro de dépôt: 82401517.6

(22) Date de dépôt: 10.08.82

(54) Dispositif d'élimination des échos mobiles de Nième trace et des échos parasites dans un radar.

(30) Priorité: 28.08.81 FR 8116466

(43) Date de publication de la demande:
09.03.83 Bulletin 83/10

(45) Mention de la délivrance du brevet:
09.04.86 Bulletin 86/15

(84) Etats contractants désignés:
CH DE GB IT LI NL

(56) Documents cités:
FR - A - 2 097 168
US - A - 3 109 171
US - A - 3 828 348

(73) Titulaire: THOMSON-CSF, 173, Boulevard Haussmann,
F-75379 Paris Cedex 08 (FR)

(72) Inventeur: Penhard, Serge Jean, THOMSON-CSF
SCPI 173, bld Haussmann, F-75379 Paris Cedex 08 (FR)

(74) Mandataire: Benoit, Monique et al, THOMSON-CSF
SCPI 19, avenue de Messine, F-75008 Paris (FR)

LIBER, STOCKHOLM 1986

## Description

La présente invention a pour objet un dispositif d'élimination des échos mobiles de $n^{ième}$ trace et des échos parasites radar dans un radar fonctionnant par rafales et muni d'un dispositif de visualisation des cibles mobiles (V.C.M.). On entend par radar ayant un séquencement par rafales, un radar qui émet des signaux pendant un certain nombre de récurrences successives, toutes les récurrences appartenant à une même rafale ayant même fréquence d'émission et même période de récurrence.

En raison de l'amélioration de la détection et de la puissance des émetteurs utilisés dans un radar de veille ou d'atterrissage, le nombre des échos mobiles reçus, utiles et parasites, est de plus en plus grand, ce qui entraîne certains inconvénients. Notamment pour une portée P donnée d'un radar considéré lorsque la distance D d'une cible détectée par rapport au radar est inférieure à cette portée, la distance de la cible lue sur l'indicateur vidéo est bien la distance réelle, mais si la cible se trouve à une distance D supérieure à la portée P du radar, l'indication vidéo est erronée, ce qui peut gêner l'exploitation ultérieure du signal radar. Un autre inconvénient peut exister, dû aux échos provenant d'un autre radar en zone proche et dont la fréquence de récurrence est différente de celle du radar considéré. Ces échos n'apparaissant qu'une fois dans une rafale et dans une case distance, ils peuvent perturber les indications utiles données par l'indicateur vidéo du radar.

Par ailleurs, on connaît du document US—3 828 348 un dispositif pour éliminer les échos multiples (MTAE) avec un circuit interdisant leur représentation vidéo dans le cas où ils existent. Toutefois, ce dispositif ne concerne que les échos multiples et ne permet pas l'éliminer les échos parasites visés au paragraphe précédent.

L'invention a pour but de remédier à ces inconvénients et de réaliser un dispositif d'élimination de ces échos parasites ou au moins de les atténuer fortement, évitant par exemple à un contrôleur aérien d'entamer une procédure d'atterrissage à partir d'un de ces échos parasites.

A cet effet, selon l'invention, le dispositif d'élimination des échos mobiles de $n^{ième}$ trace et des échos parasites radar dans un système radar fonctionnant par rafales comportant un dispositif dit V.C.M. de Visualisation Cibles Mobiles pour le traitement du signal radar, qui laisse passer les échos de la première récurrence et fournit un signal filtré résultant des échos des autres récurrences, est caractérisé en ce qu'il comporte: des premiers moyens assurant la détection des échos de première récurrence dont l'amplitude est supérieure à un premier seuil donné; des deuxièmes moyens assurant la détection du signal filtré fourni par le dispositif V.C.M. lorsque son amplitude est supérieure à un deuxième seuil donné, et des moyens d'interdiction de la visualisation des échos sur une vidéo lorsqu'il n'y a pas de détection à la fois par les premiers et deuxièmes moyens.

Suivant l'invention, pour chaque rafale et pour une même case distance, le niveau des échos de la première récurrence est comparé à un seuil $S_1$ et le niveau des échos des autres récurrences, filtrés par le V.C.M., est comparé à un seuil $S_2$. Lorsque les deux seuils $S_1$ et $S_2$ sont dépassés simultanément, les échos sont evoyés sur l'indicateur vidéo; par contre, lorsque seul le seuil $S_2$ est dépassé, les échos sont éliminés.

D'autres avantages et caractéristiques de l'invention ressortiront de la description des figures suivantes représentant:

figures 1 et 2: une case distance donnée, pendant l'émission d'une rafale par le radar;

figures 3 et 4: deux schémas synoptiques de réalisation du dispositif selon l'invention; ·

figure 5: un schéma synoptique de réalisation d'un dispositif selon l'invention, avec un critère de "zones denses".

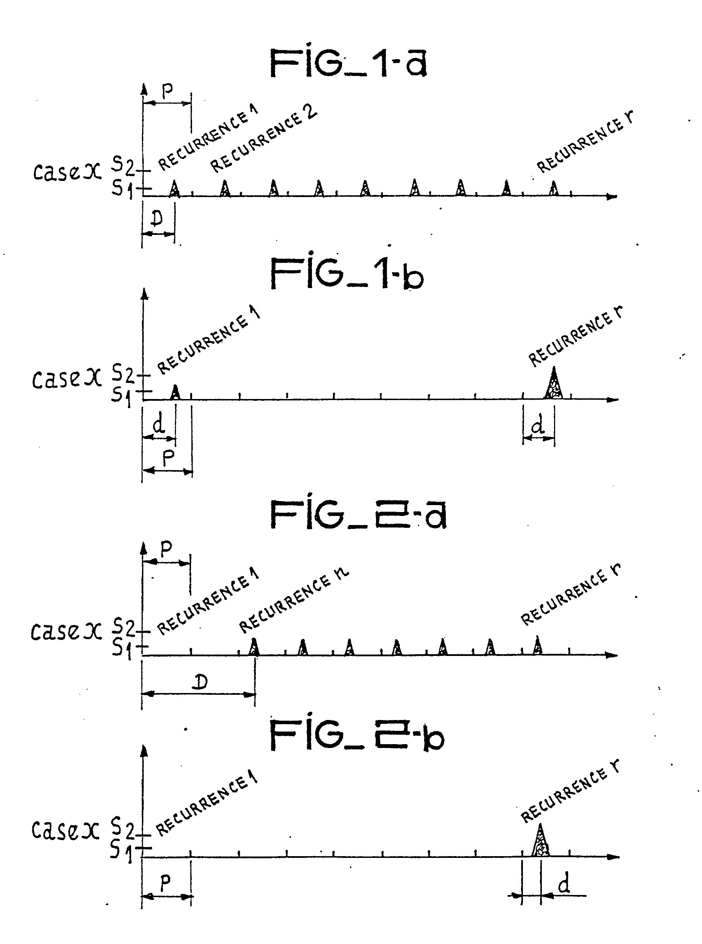

Dans un radar fonctionnant par rafale, les informations concernant l'espace balayé par le radar sont reçues case distance par case distance, c'est-à-dire par pas de quantification en distance pour chaque récurrence de chaque rafale. Sur la figure la sont représentées pour une rafale les informations provenant d'une cible et reçues dans une case x donnée récurrence par récurrence, dans le cas où cette cible se situe à une distance D inférieure à la portée P du radar. L'écho de cette cible apparaît alors dans la première récurrence ainsi que dans les autres récurrences, 2 à r de la rafale, r étant le nombre maximum de récurrences par rafale. Le filtrage V.C.M. étant d'abord appliqué aux échos de toutes les récurrences 1 à r, mais étant passant pour le première, selon l'invention, le niveau de l'écho de la première récurrence est comparé à un seuil $S_1$ et le niveau du signal résultant du filtrate V.C.M., appliqué aux échos des autres récurrences et dont le but est d'éliminer les échos fixes, est comparé à un seuil $S_2$. Ces deux échos sont représentés sur la figure 1b, le résultat du filtrage V.C.M. effectué en temps réel apparaissant sur la dernière récurrence de la rafale.

Les deux seuils $S_1$ et $S_2$ ne sont pas identiques car ils doivent tenir compte de la différence de gain entre les deux signaux auxquels ils sont respectivement comparés, différence due au dispositif V.C.M. qui réalise une intégration sur plusieurs récurrences.

Dans le cas choisi ici où la cible est à une distance D inférieure à la portée P du radar, les deux seuils vont être dépassés indiquant la présence d'une cible vue à la fois dans la récurrence 1 et dans les autres récurrences; aussi autorise-t-on le signal à figurer sur la vidéo qui va délivrer une information distance d pour la cible qui sera bien égale à la distance D réelle.

Par contre, lorsque la cible se situe à une distance D supérieure à la portée P du radar, nécessairement l'écho de cette cible n'apparait pas la récurrence 1, mais apparait dans les autres à partir de la récurrence n correspondant à D, comme le montre la figure 2a.

Comme précédemment on compare le niveau du signal de la récurrence 1 au seuil $S_1$ et le niveau du signal résultant du filtrage V.C.M. des autres récurrences n à r au seuil $S_2$, ces deux signaux étant représentés sur la figure 2b. Dans ce cas précis, le seuil $S_1$ n'est pas dépassé alors que le seuil $S_2$ l'est indiquant la présence d'une cible à une distance supérieure à la portée P; on interdit alors au signal d'apparaître sur la vidéo, car celle-ci indiquerait une information distance erronée. Suivant la distance D de la cible au radar, l'écho correspondant se situe à partir de la récurrence 2, 3 ou n, c'est pourquoi on parle d'écho de seconde, troisième ou $n^{ième}$ trace. L'objet de l'invention est donc d'éliminer les échos de $n^{ième}$ trace, autre que la première.

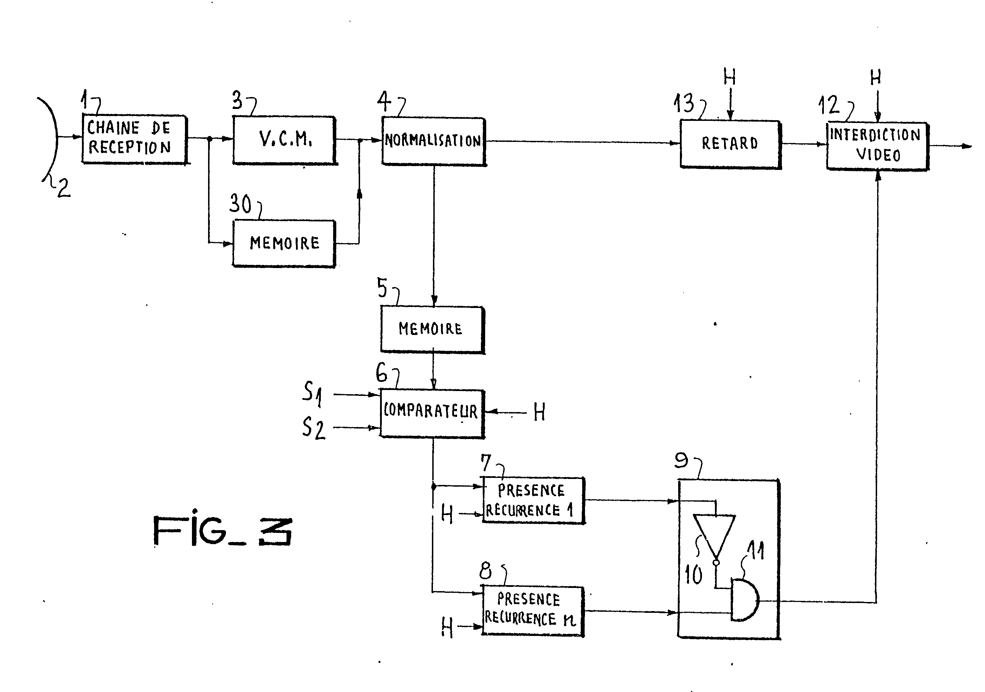

La figure 3 représente un schéma synoptique de réalisation du dispositif selon l'invention. Le système radar classique considéré auquel est appliqué ce dispositif, fonctionne par rafales et comporte une chaîne de réception 1 en sortie de l'antenne 2, suivie d'un dispositif 3 d'élimination des échos fixes (V.C.M. Visualisation des cibles mobiles) et d'un circuit mémoire 30 placé en parallèle.

Ce dispositif V.C.M. est transparent pour la première récurrence mais traite les signaux des autres récurrences, de la seconde à la dernière, le résultat de ce traitement apparaissant à la dernière récurrence r. Les signaux issus de ce dispositif V.C.M. sont ensuite normés par rapport au bruit dans un dispositif 4 de normalisation. Selon l'invention on ajoute à ce qui précède un circuit mémoire 5, retardant les informations reçues pendant la première récurrence de chaque rafale, case distance après case distance, afin qu'elles apparaissent en même temps que celles de la dernière et r ième récurrence à la sortie de cette mémoire 5 qui est reliée à un circuit de comparaison 6. Pare ce circuit, elles sont comparées à deux seuils $S_1$ et $S_2$ suivant leurs appartenances respectives à la récurrence 1 ou à la récurrence r. Suivant ce même critère, les signaux ainsi comparés sont dirigés vers deux circuits logiques distincts 7 et 8 déterminant si les deux seuils $S_1$ et $S_2$ sont dépassés, autrement dit s'il y a présence d'un écho dans la récurrence 1 et/ou las récurrence r de chaque rafale. Ces deux circuits indiquent par des bits 0 ou 1 si les seuils sont dépassés.

Comme on l'a vu précédemment, si pour la case x par exemple il y a présence d'écho dans la récurrence 1 et présence d'écho dans la dernière récurrence de la rafale, où se trouve le résultat du filtrage V.C.M., on dit qu'il y a écho de première trace et on autorise alors le signal à paraître sur la vidéo sachant qu'elle délivrera sur l'indicateur une information distance exacte sur la cible. S'il n'y a pas d'écho dans la récurrence 1 mais une présence dans la dernière récurrence après filtrage, on dit qu'il y a écho de $n^{ième}$ trace, si la cible renvoie un écho à partir de la $n^{ième}$ récurrence de la rafale. Dans ce cas, le signal est rejeté et n'apparaît pas sur la vidéo. Enfin, dernier cas envisageable, si les deux seuils $S_1$ et $S_2$ ne sont pas dépassés, il n'y a pas d'écho mobile intéressant et aucun signal n'apparaît sur la vidéo. Pour autoriser ou non la représentation vidéo en sortie des circuits logiques 7 et 8 est disposé un premier circuit logique 9, composé d'un inverseur 10 et d'une porte ET 11. Ce circuit 9 délivre une information sous forme de bits 0 et 1 à un second circuit logique 12 délivrant ou non l'interdiction de représentation vidéo. Ce même circuit 12 reçoit également les informations reçues par le radar, par l'intermédiaire d'un circuit à retard 13, empêchant ces informations d'arriver sur la visualisation avant qu'elles ne soient traitées par le dispositif selon l'invention. Les circuits 6, 7, 8, 12 et 13 sont reliés à une horloge ou mode de séquencement pour synchroniser toutes les informations.

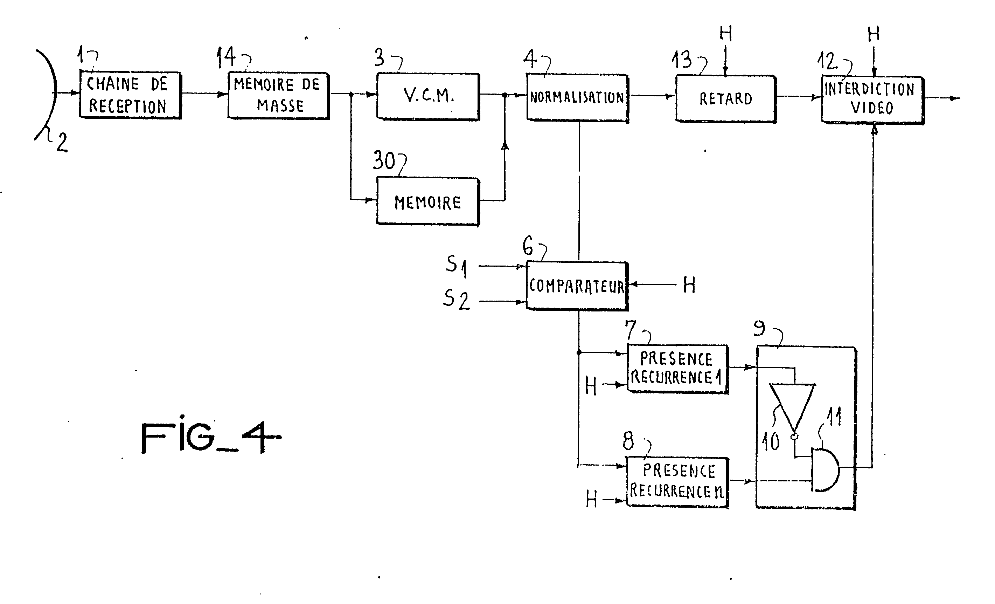

Certains systèmes radar possèdent une mémoire de masse 14, mémorisant le contenu de chaque rafale et placée en tête du dispositif V.C.M., comme le montre la figure 4. Selon l'invention, cela évite d'avoir à mettre un circuit mémoire après le dispositif de normalisation, afin de retarder la récurrence 1 par rapport à la récurrence r. Les autres circuits du schéma étant identiques à ceux de la figure 3, leurs références sont les mêmes.

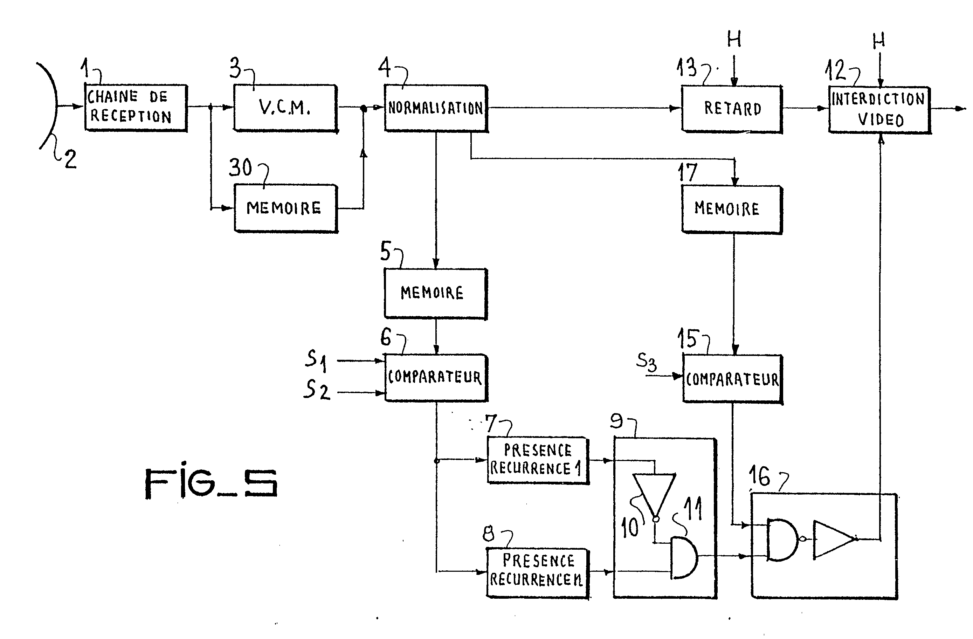

En présence de clutter, il peut apparaître un affaiblissement des échos de première trace. Pou y remédier, on ajoute un seuil sur la valeur moyenne des niveaux des échos de première trace, élaborée lors de la normalisation des signaux par rapport au bruit, afin de réaliser un critère "zones denses". Lorsqu'il n'y a pas présence d'écho dans la récurrence 1 mais présence dans la dernière récurrence où se trouve le résultat du filtrage V.C.M., on envisage deux possibilités; ou bien la valeur moyenne des niveaux des échos de première trace est faible, c'est-à-dire inférieure à un seuil $S_3$, dans ce cas la représentation vidéo est interdite, ou bien cette valeur moyenne est supérieure à $S_3$ et alors ou autorise la représentation vidéo. De façon pratique, comme cela est représenté sur la figure 5—dont les circuits identiques à ceux des deux figures 3 et 4 portent les mêmes références—les échos de première trace, issus du circuit de normalisation 4, sont mémorisés dans un circuit 17 qui élabore la valeur moyenne des niveaux de ces échos. Cette valeur moyenne est ensuite comparée à un seuil $S_3$ dans un circuit comparateur 15. Ce circuit 15 délivre des informations sous forme de bits 0 ou 1 qui entrent dans un circuit logique 16, placé à la sortie du circuit logique 9. Ce circuit 16 est une porte ET reliée au circuit 12 délivrant l'interdiction de la représentation vidéo, lorsque cela est nécessaire.

On vient ainsi de décrire un dispositif d'élimination des échos mobiles de nième trace et des échos parasites radar, qui peut être avantageusement appliqué à un radar de veille ou à un radar d'atterrissage, fonctionnant par impulsions.

**Revendications**

1. Dispositif d'élimination des échos mobile de $n^{ième}$ trace et des échos parasites radar dans un système radar fonctionnant par rafales comportant un dispositif dit V.C.M. de Visualisation des Cibles Mobiles pour le traitement du signal radar, qui laisse passer les échos de la première récurrence et fournit un signal filtré résultant des échos des autres récurrences caractérisé en ce qu'il comporte: des premiers moyens assurant la détection des échos de première récurrence dont l'amplitude est supérieure à un premier seuil donné ($S_1$); des deuxièmes moyens assurant la détection du signal filtré fourni par le dispositif V.C.M. lorsque son amplitude est supérieure à un deuxième seuil donné ($S_2$), et des moyen d'interdiction de la visualisation des échos sur une vidéo lorsqu'il n'y a pas de détection à la fois par les premiers et deuxièmes moyens.

2. Dispositif d'élimination selon la revendication 1, dans un système radar comportant des moyens de normalisation du signal radar traité par le dispositif V.C.M., caractérisé en ce que les premiers et deuxièmes moyens de détection comportent un circuit mémoire (5) placé en sortie de ces moyens de normalisation (4), associé à un circuit de comparaison (6) aux premier et deuxième seuils ($S_1$, $S_2$).

3. Dispositif d'élimination selon la revendication 1, dans un système radar ayant un circuit de mémoire de masse (14) placé entre la chaîne de réception (1) des signaux radar et le dispositif V.C.M. (3), caractérisé en ce que les premiers et deuxièmes moyens de détection sont formés du circuit de mémoire (14) et d'un circuit de comparaison (6) aux premier et deuxième seuils ($S_1$, $S_2$).

4. Dispositif d'élimination selon l'une des revendications précédentes, caractérisé en ce que les premiers et deuxièmes moyens de détection comportent chacun un circuit logique (7, 8) déterminant si les premier et deuxième seuils ($S_1$, $S_2$), respectivement, sont dépassés.

5. Dispositif d'élimination selon l'une des revendications précédentes, caractérisé en ce que les moyens d'interdiction de la visualisation des échos sur une vidéo sont constitués par un premier circuit logique (9) relié à un second circuit logique (12), ce dernier recevant les échos radar normés par l'intermédiaire d'un circuit à retard (13).

6. Dispositif d'élimination selon les revendications 4 et 5, caractérisé en ce que le premier circuit logique (9) est constitué d'un inverseur (10), relié au circuit logique (7) des premiers moyens de détection, et d'une porte logique ET (11) reliée d'une part à l'inverseur (10) et d'autre part au circuit logique (8) des deuxièmes moyens de détection.

7. Dispositif d'élimination selon l'une des revendications précédentes, caractérisé en ce que les premiers moyens de détection élaborent de plus la valeur moyenne des échos de première récurrence et la détection de cette valeur moyenne lorsqu'elle est supérieure à un troisième seuil donné ($S_3$).

8. Dispositif d'élimination selon la revendication 7, caractérisé en ce que, pour la détection de la valeur moyenne, les premiers moyens de détection comportent en outre un circuit mémoire supplémentaire (17), recevant les échos radar d'un circuit de normalisation (4) associé à un circuit de comparaison (15) au troisième seuil ($S_3$).

9. Dispositif d'élimination selon les revendications 6 et 7, caractérisé en ce que les moyens d'interdiction de la visualisation comportent de plus un circuit logique (16) comportant une porte ET, dont les deux entrées sont reliées respectivement au premier circuit logique (9) et au circuit de comparaison (15) et dont la sortie aboutit au second circuit logique (12).

**Patentansprüche**

1. Vorrichtung zur Entfernung beweglicher Echos der n-ten Spur und von Radarstörechos in einem Burst-Radarsystem mit einer Vorrichtung V.C.M. zur Anzeige der beweglichen Ziele und zur Verarbeitung des Radarsignals, die die Echos der ersten Rekurrenz durchläßt und ein gefiltertes Signal liefert, das von den Echos der späteren Rekurrenzen stammt, dadurch gekennzeichnet, daß erste Mittel, die die Erkennung der Echos der ersten Rekurrenz, deren Amplitude über einer gegebenen Schwelle ($S_1$) liegt, bewirken; zweite Mittel, die die Erkennung des von der V.C.M.-Vorrichtung gelieferten gefilterten Signals bewirken, wenn dessen Amplitude über einer zweiten gegebenen Schwelle ($S_2$) liegt, und Mittel vorgesehen sind, mit denen die Anzeige der Echos auf einem Bildschirm unterdrückt wird, falls nicht zugleich die ersten und die zweiten Erkennungsmittel angesprochen haben.

2. Entfernungsvorrichtung nach Anspruch 1 in einem Radarsystem, das Mittel zur Normalisierung des von der V.C.M.-Vorrichtung verarbeiteten Radarsignals besitzt, dadurch gekennzeichnet, daß die ersten und zweiten Erkennungsmittel einen Speicherkreis (5) aufweisen, der am Ausgang der Normalisierungsmittel (4) angeordnet ist und einem Vergleichskreis (6) mit der ersten und der zweiten Schwelle ($S_1$, $S_2$) zugeordnet ist.

3. Entfernungsvorrichtung nach Anspruch 1 für ein Radarsystem, das einen Massespeicherkreis (14) zwischen der Radarsignalempfangskette (1) und der V.C.M.-Vorrichtung (3) aufweist, dadurch gekennzeichnet, daß die ersten und zweiten Erkennungsmittel von dem Speicherkreis (14) und einem Vergleichskreis (6) mit der ersten und der zweiten Schwelle ($S_1$, $S_2$) gebildet werden.

4. Entfernungsvorrichtung nach einem der vorhergehenden Ansprüche, dadurch gekennzeichnet, daß die ersten und zweiten Erkennungsmittel je einen logischen Schaltkreis (7, 8) aufweisen, der bestimmt, ob die ersten bzw. zweite Schwelle ($S_1$, $S_2$) überschritten wurde.

5. Entfernungsvorrichtung nach einem der vorhergehenden Ansprüche, dadurch gekennzeichnet, daß die Mittel zur Unterdrückung der Anzeige der Echos auf einem Bildschirm von einem ersten logischen Schaltkreis (9) gebildet werden, der an einen zweiten logischen Schaltkreis (12) angeschlossen ist, wobei letzterer die genormten Radarechos über einen Verzögerungskreis (13) empfängt.

6. Entfernungsvorrichtung nach einem der Ansprüche 4 und 5, dadurch gekennzeichnet, daß der erste logische Schaltkreis (9) aus einem Inverter (10), der an den logischen Schaltkreis (7) der ersten Erkennungsmittel angeschlossen ist, und aus einem logischen UND-Tor (11) besteht, das einerseits an den Inverter (10) und andererseits an den logischen Schaltkreis (8) der zweiten Erkennungsmittel angeschlossen ist.

7. Entfernungsvorrichtung nach einem der vorhergehenden Ansprüche, dadurch gekennzeichnet, daß die ersten Erkennungsmittel außerdem den Mittelwert der Echos der ersten Rekurrenz bilden und diesen Mittelwert entdecken, wenn er eine dritte gegebene Schwelle ($S_3$) übersteigt.

8. Entfernungsvorrichtung nach Anspruch 7, dadurch gekennzeichnet, daß die ersten Entdeckungsmittel für die Entdeckung des Mittelwerts, außerdem einen zusätzlichen Speicherkreis (17) enthalten, der die Radarechos von einem Normalisierkreis (4) empfängt und einem Kreis (15) zum Vergleich mit der dritten Schwelle ($S_3$) zugeordnet ist.

9. Entfernungsvorrichtung nach den Ansprüchen 6 und 7, dadurch gekennzeichnet, daß die Mittel zur Unterdrückung der Anzeige außerdem einem logischen Schaltkreis (16) mit einem UND-Tor enthalten, dessen einer Eingang mit dem ersten logischen Kreis (9) und dessen zweiter Eingang mit dem Vergleichskreis (15) verbunden ist, während sein Ausgang zum zweiten logischen Kreis (12) führt.

## Claims

1. A device for the elimination of the $n^{th}$ trace moving echos and of the clutter radar echos in a radar system operating by bursts and comprising a target display device V.C.M. for processing the radar signal, which transmits the echos of the first trace and delivers a filtered signal resulting from the echos of the other traces, characterized in that it comprises: first means for detecting the first trace echos, the amplitude of which exceeds a first given threshold ($S_1$); second means for detecting the filtered signal delivered by the V.C.M. device, if its amplitude exceeds a second given threshold ($S_2$), and means for inhibiting the display of the echos on a video screen, if the first and the second detector means have not been activated simultaneously.

2. An elimination device according to claim 1 in a radar system comprising means for standardizing the radar signal processed by the V.C.M. device, characterized in that the first and the second detector means comprise a memory circuit (5) arranged at the output of said standardizing means (4) and associated to a circuit for comparison (6) with the first and the second threshold ($S_1$, $S_2$).

3. An elimination device according to claim 1 in a radar system having a mass memory circuit (14) arranged between the radar signal reception chain (1) and the V.C.M. device (3), characterized in that the first and the second detection means are constituted by the memory circuit (14) and by a circuit (6) for comparison with the first and the second thresholds ($S_1$, $S_2$).

4. An elimination device according to any one of the preceding claims, characterized in that the first and second detection means each comprise a logic circuit (7, 8) for determining if the first or the second threshold ($S_1$, $S_2$) respectively are exceeded.

5. An elimination device according to one of the preceding claims, characterized in that the means for inhibiting the display of the echos on a video screen are constituted by a first logic circuit (9) connected to a second logic circuit (12), the latter receiving the standardized radar echos via a delay circuit (13).

6. An elimination device according tm claims 4 and 5, characterized in that the first logic circuit (9) is constituted by an inverter (10) connected to the logic circuit (7) of the first detection means, and by a logic AND gate (11) connected on the one hand to the inverter (10) and on the other hand to the logic circuit (8) of the second detection means.

7. An elimination device according to one of the preceding claims, characterized in that the first detection means moreover generate the mean value of the first trace echos and detect this mean value, if it exceeds a third given threshold ($S_3$).

8. An elimination device according to claim 7, characterized in that, in view of the detection of the mean value, the first detection means further comprise an additional memory circuit (17) receiving the radar echos from a standardization circuit (4) and associated to a circuit (15) for comparison with the third threshold ($S_3$).

9. An elimination device according to claim 6 and 7, characterized in that the means for inhibiting the display further comprise a logic circuit (16) including an AND gate, the two inputs of which are connected respectively to the first logic circuit (9) and to the comparison circuit (15) and the output of which leads to the second logic circuit (12).

## FIG_1-a

case x

S2
S1

P

RECURRENCE 1   RECURRENCE 2                                    RECURRENCE r

D

## FIG_1-b

case x

S2
S1

RECURRENCE 1                                              RECURRENCE r

d          d

P

## FIG_2-a

case x

S2
S1

P

RECURRENCE 1   RECURRENCE n                              RECURRENCE r

D

## FIG_2-b

case x

S2
S1

RECURRENCE 1                                              RECURRENCE r

P          d

1

FIG_3

FIG_4

0 073 706

FIG_5

CHAINE DE RECEPTION — 1

V.C.M. — 3

MEMOIRE — 30

NORMALISATION — 4

MEMOIRE — 5

COMPARATEUR — 6

PRESENCE RECURRENCE 1 — 7

PRESENCE RECURRENCE n — 8

RETARD — 13

MEMOIRE — 17

COMPARATEUR — 15

INTERDICTION VIDEO — 12

0 073 706